# EUROPÄISCHE PATENTSCHRIFT

(11) **EP 2 550 318 B1**
(45) Veröffentlichungstag und Bekanntmachung des Hinweises auf die Patenterteilung: **16.07.2014**
(21) Anmeldenummer: 11709742.8
(22) Anmeldetag: 24.03.2011
(51) Int. Cl.: C08J 7/00

(54) **PE-WACHSDISPERSIONEN BEI DER BESCHICHTUNG VON KUNSTSTOFFEN**
PE WAX DISPERSIONS IN THE COATING OF PLASTICS
DISPERSIONS DE CIRE DE PE UTILISEES POUR LE REVETEMENT DE MATIERES PLASTIQUES

(30) Priorität: 25.03.2010 EP 10157720
(43) Veröffentlichungstag der Anmeldung: 30.01.2013
(73) Patentinhaber: BASF SE, 67056 Ludwigshafen (DE)
(72) Erfinder: CSIHONY, Szilard, 69469 Weinheim (DE); GARCIA CASTRO, Ivette, 67067 Ludwigshafen (DE); PFISTNER, Heike, 67071 Ludwigshafen (DE); WAGNER, Eva, 67098 Bad Dürkheim (DE); BAUM, Pia, 69469 Weinheim (DE); WEIDL, Christian Hubert, 67346 Speyer (DE)
(86) Internationale Anmeldenummer: PCT/EP2011/054533
(87) Internationale Veröffentlichungsnummer: WO 2011/117345

(56) Entgegenhaltungen:
- EP-A1- 1 022 294
- WO-A2-2011/031558
- GB-A- 2 456 828
- JP-A- 63 286 471
- JP-A- 2005 146 202
- US-A- 5 585 192
- US-A1- 2003 018 139
- US-A1- 2003 044 626

## Beschreibung

Die Erfindung betrifft eine wässrige Lackformulierung bestehend aus mindestens einem wässrigen Basislack und mindestens einer wässrigen Dispersion von mindestens einem speziellen Ethylen-Copolymerwachs und ihre Verwendung als Basislackformulierung zur Beschichtung von Kunststoffen.

Kunststoffformteile finden in vielen Bereichen wie in Automobilen, im Haushalt etc. Anwendung. Das Lackieren von Kunststoffformteilen gestaltet sich oftmals schwierig, da übliche Lacke nur schlecht an Kunststoffmaterialien haften. Insbesondere die Lackierung von unpolaren Kunststoffmaterialien wie Polypropylen (PP) und thermoplastischen Olefinen (TPO) gestaltet sich schwierig. Von daher wird oftmals eine Primerschicht enthaltend ein Haftvermittlersystem auf die gereinigte Kunststoffoberfläche aufgebracht, welche die Haftung zwischen der Oberfläche und einem Basislack verstärkt. Die für die Primerschicht verwendete Formulierung enthält häufig organische Lösungsmittel und chlorierte Polyolefine (CPO). Auf die Primerschicht werden dann der Basislack und gegebenenfalls ein Klarlack aufgetragen. Sowohl Basislack als auch Klarlack sind in Europa vorwiegend auf Wasserbasis.

US-A-3637428 beschreibt Substrate basierend auf Copolymeren von Ethylen und einem polaren Comonomeren, welche mit einer Basislackformulierung enthaltend das lackbildende Harz, ein Vinylacetatpolymer als Haftvermittler und ein organisches Lösungsmittel beschichtet werden. Von Nachteil ist die Verwendung eines organischen Lösungsmittels und dass die Beschichtung nur für sehr spezielle Substrate geeignet ist.

US-A 5,585,192 beschreibt eine Formulierung auf Wasserbasis zur Haftvermittlung, welche ein maleiniertes Polyolefin und ein Polyolefin-Wachs enthält. Die Formulierung verstärkt als Primerschicht die Haftung zwischen Polymersubstraten aus PP, TPO und PE und einem Basislack.

Zur Verbesserung der Haftung von Lacken an PP- und TPO-Kunststoffoberflächen vertreibt die Firma Eastman das Produkt Advantis ^{®} 510W (^{®} = eingetragenes Warenzeichen), welches eine wässrige Dispersion eines halogenfreien Polyolefin-Haftvermittlers ist. Advantis ^{®} 510W kann direkt mit wässrigen Lackformulierungen auf Acryl- oder Polyurethanbasis gemischt werden und so auf ein Kunststoffsubstrat aufgebracht werden.

US-A-20030018139 offenbart lösungsmittelhaltige und wässrige Primer-Formulierungen enthaltend ein carboxyliertes Polyolefin, welches mit polyfunktionellen Alkoholen modifiziert ist. Das Polyolefin ist vorzugsweise ein Propylen-EthylenCopolymer, auf welches carboxylgruppenhaltige Monomere, bevorzugt Maleinsäureanhydrid, aufgepfropft sind, welche durch eine Reaktion mit einem polyfunktionellen Alkohol teilweise oder vollständig modifiziert werden. Wässrige Emulsionen werden dadurch erhalten, dass ein Teil der Carboxylgruppen durch ein Amin oder eine anorganischen Base neutralisiert werden. Die vorgenannten Reaktionsprodukte werden als Primer eingesetzt und verbessern die Haftung von Lacken auf Kunststoffsubstraten wie TPO. Darüber hinaus werden Mischungen des Basislacks mit dem alkoholmodifizierten, carboxylierten Polyolefin beschrieben, die in dieser Form auf ein Substrat aufgebracht werden können.

Aus Kostenüberlegungen wird zunehmend angestrebt auf die Primerschicht zu verzichten, aber trotzdem eine zufrieden stellende Adhäsion eines Basislacks auf Wasserbasis auf einer Kunststoffoberfläche zu gewährleisten.

Aufgabe der Erfindung ist es daher verbesserte Kunststoffbeschichtungen bereitzustellen, die die vorgenannten Anforderungen erfüllen.

Es wurde nun gefunden, dass wässrige Basislackformulierungen, welche zusätzlich wässrige Dispersionen basierend auf speziellen Polyethylen-Copolymer-Wachsen enthalten, sich bei der Beschichtung von Kunststoffen durch eine besonders gute Haftvermittlung auszeichnen.

Gegenstand der Erfindung ist daher eine wässrige Lackformulierung bestehend aus mindestens einem wässrigen Basislack und mindestens einer wässrigen Dispersion von mindestens einem zumindest partiell neutralisierten Ethylencopolymerwachs, welches ausgewählt ist aus gradienten oder statistischen Ethylencopolymerwachsen, die als Comonomere einpolymerisiert enthalten:
(A) 12 bis 40 Gew.-%, vorzugsweise 20 bis 35 Gew.-%, mindestens einer ethylenisch ungesättigten Carbonsäure der allgemeinen Formel I, 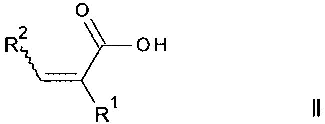 wobei
   R¹ und R² unabhängig voneinander gewählt sind aus Wasserstoff, unverzweigtem und verzweigtem C₁-C₁₀-Alkyl;
(B) 60 bis 88 Gew.-%, vorzugsweise 80 bis 65 Gew.-%, Ethylen;
(C) 0 bis 10 Gew.-%, vorzugsweise 0 bis 5 Gew.-%, Maleinsäureanhydrid und/oder Glycidylmethacrylat;
   oder
(A') 5 bis 50 Gew.-%, vorzugsweise 20 bis 40 Gew.-%, mindestens eines Comonomers der allgemeinen Formel II 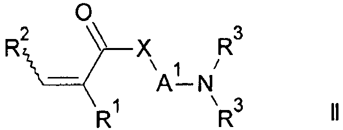 wobei
   R¹ und R² unabhängig voneinander gewählt sind aus Wasserstoff, unverzweigtem und verzweigtem C₁-C₁₀-Alkyl,
   R³ unabhängig voneinander gewählt sind aus Wasserstoff, unverzweigtem und verzweigtem C₁-C₁₀-Alkyl und C₃-C₁₂-Cycloalkyl, wobei zwei Reste R³ miteinander unter Bildung eines 3 bis 10-gliedrigen Rings verbunden sein können,
   X gewählt ist aus Sauerstoff, Schwefel und N-R⁴,
   R⁴ gewählt ist aus unverzweigtem und verzweigtem C₁-C₁₀-Alkyl und Wasserstoff, und
   A¹ eine divalente Gruppe, gewählt aus C₁-C₁₀-Alkylen, C₄-C₁₀-Cycyloalkylen und Phenylen, ist;
(B') 50 bis 95 Gew.-% Ethylen, vorzugsweise 60 bis 80 Gew.-%, und
(C') null bis 20 Gew.-%, vorzugsweise null bis 10 Gew.-%, Maleinsäureanhydrid und/oder Glycidylmethacrylat;
wobei das Ethylencopolymerwachs enthaltend die Comonomeren (A), (B) und gegebenenfalls (C) ein Molekulargewicht M_{w} von 10.000 bis 150.000 g/mol und das Ethylencopolymerwachs enthaltend die Comonomeren (A'), (B') und gegebenenfalls (C') ein Molekulargewicht M_{w} von 5.000 bis 40.000 g/mol aufweist.

Unter einpolymerisiert enthaltenen Comonomeren (A), (B) und (C) bzw. (A'), (B') und (C') werden dabei die Anteile an Comonomer verstanden, die molekular in die erfindungsgemäß verwendeten Ethylencopolymerwachse eingebaut werden und sich zu 100 Gew.-% ergänzen.

Der Anteil der wässrigen Ethylencopolymerwachs-Dispersion in der erfindungsgemäßen Lackformulierung beträgt im Allgemeinen 0,1 bis 10 Gew.-%, bevorzugt 0,5 bis 5 Gew.-%, besonders bevorzugt 1 bis 3 Gew.-%, bezogen auf den wässrigen Basislack.

Ein erfindungsgemäß eingesetztes Ethylencopolymer, welches Comonomer (A') einpolymerisiert enthält, kann partiell protoniert oder als freies Amin vorliegen.

In den Formeln I und IIsind die Variablen wie folgt definiert:
R¹ und R² sind gleich oder verschieden;
R¹ wird gewählt aus Wasserstoff und
   unverzweigtem und verzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nony), n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
R² wird gewählt aus unverzweigtem und verzweigtem C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl,
   und ganz besonders bevorzugt Wasserstoff;
die Reste R³ sind verschieden oder vorzugsweise gleich und gewählt aus Wasserstoff und verzweigtem und bevorzugt unverzweigtem C₁-C₁₀-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; bevorzugt Methyl, Ethyl, n-Propyl, n-Butyl, n-Pentyl, iso-Pentyl, n-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, ganz besonders bevorzugt Methyl;
C₃-C₁₂-Cycloalkyl wie beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl wobei zwei Reste R³ miteinander unter Bildung eines gegebenenfalls mit C₁-C₄-Alkylresten substituierten 3- bis 10-gliedrigen, bevorzugt 5- bis 7-gliedrigen Rings verbunden sein können,
   besonders bevorzugt kann eine N(R³)₂-Gruppe gewählt sein aus

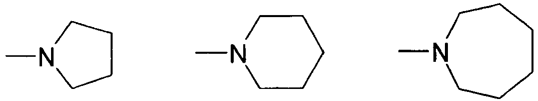

Wenn die Reste R³ verschieden sind, so kann einer der Reste R³ Wasserstoff sein.
X wird gewählt aus Schwefel, N-R⁴ und insbesondere Sauerstoff.
R⁴ wird gewählt aus Wasserstoff und unverzweigtem und verzweigtem C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, bevorzugt Wasserstoff und C₁-C₄-Alkyl wie Methyl, Ethyl, n-Propyl, iso-Propyl, n-Butyl, iso-Butyl, sec.-Butyl und tert.-Butyl, besonders bevorzugt Methyl, und Wasserstoff;
A¹ wird gewählt aus divalenten Gruppen wie
   C₁-C₁₀-Alkylen, wie beispielsweise -CH₂-, -CH(CH₃)-, -(CH₂)₂-, -CH₂-CH(CH₃)-, cis- und trans-CH(CH₃)-CH(CH₃)-, -(CH₂)₃-, -CH₂-CH(C₂H₅)-, -(CH₂)₄-, -(CH₂)₅-, -(CH₂)₆-, -(CH₂)₇-, -(CH₂)₈-, -(CH₂)₉-, -(CH₂)₁₀-; vorzugsweise C₂-C₄-Alkylen; wie -(CH₂)₂-, -CH₂-CH(CH₃)-, -(CH₂)₃-, -(CH₂)₄- und -CH₂-CH(C₂H₅)-, besonders bevorzugt -(CH₂)₂-,-(CH₂)₃- und -(CH₂)₄-, ganz besonders bevorzugt -(CH₂)₂-; C₄-C₁₀-Cycyloalkylen wie beispielsweise 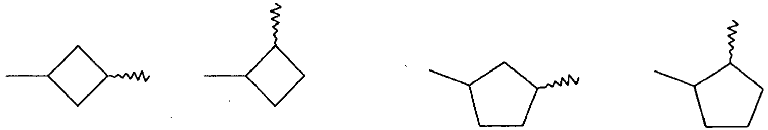 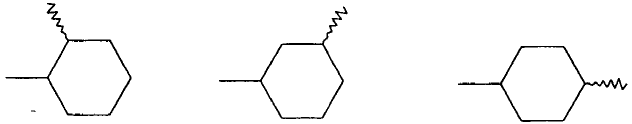 vorzugsweise 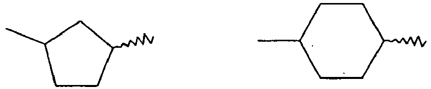 isomerenrein oder als Isomerengemisch,
   und
   Phenylen, beispielsweise ortho-Phenylen, meta-Phenylen und besonders bevorzugt para-Phenylen.

In einer Ausführungsform der vorliegenden Erfindung bedeutet R¹ Wasserstoff oder Methyl. Ganz besonders bevorzugt bedeutet R¹ Methyl.

In einer Ausführungsform der vorliegenden Erfindung bedeuten R¹ Wasserstoff oder Methyl und R² Wasserstoff. Ganz besonders bevorzugt ist Comonomer (A) Methacrylsäure.

In einer Ausführungsform der vorliegenden Erfindung bedeuten R¹ Wasserstoff oder Methyl und R² Wasserstoff, beide Gruppen R³ sind gleich und stehen jeweils für Methyl oder Ethyl.

In einer Ausführungsform der vorliegenden Erfindung steht X-A¹-N(R³)₂ für O-CH₂-CH₂-N(CH₃)₂. Ganz besonders bevorzugt ist Comonomer (A') Dimethylaminoethylmethacrylat.

In einer Ausführungsform der vorliegenden Erfindung steht X-A¹-N(R³)₂ für O-CH₂-CH₂-CH₂-N(CH₃)₂.

In einer Ausführungsform der vorliegenden Erfindung liegt Comonomer (A') in protonierter Form vor.

In einer Ausführungsform der vorliegenden Erfindung enthält das Ethylencopolymer keine weiteren Comonomere (C) oder (C') einpolymerisiert.

In einer anderen Ausführungsform der vorliegenden Erfindung enthält das Ethylencopolymer neben den Comonomeren (A') und (B') mindestens ein weiteres Comonomer (C') mit einpolymerisiert.

In einer anderen Ausführungsform der vorliegenden Erfindung enthält das Ethylencopolymer neben den Comonomeren (A') und (B') mindestens ein weiteres Comonomer (C') mit einpolymerisiert.

Dabei enthält das Ethylencopolymer gebildet aus den Comonomeren (A) und (B) oder (A') und (B') als Comonomer (C) oder (C') Maleinsäureanhydrid und/oder Glycidylmethacrylat.

In einer Ausführungsform der vorliegenden Erfindung liegt Comonomer (A) in neutralisierter Form vor.

Die in den erfindungsgemäß verwendeten Dispersionen eingesetzten Ethylencopolymerwachse, enthaltend die Comonomeren (A), (B) und gegebenenfalls (C), weisen im Allgemeinen eine Schmelzmassefließrate (MFR) im Bereich von 1 bis 50 g/10 min, bevorzugt 5 bis 20 g/10 min, besonders bevorzugt 7 bis 15 g/10 min auf, gemessen bei 160°C und einer Belastung von 325 g nach EN ISO 1133. Ihre Säurezahl beträgt üblicherweise 50 bis 200 mg KOH/g Copolymer, bevorzugt 100 bis 200 mg KOH/g Copolymer, bestimmt nach DIN 53402.

Das Molekulargewicht M_{w} der in den erfindungsgemäß verwendeten Dispersionen eingesetzten Ethylencopolymerwachse, enthaltend die Comonomeren (A), (B) und gegebenenfalls (C) beträgt im Allgemeinen von 10.000 bis 150.000 g/mol, bevorzugt von 20.000 bis 120.000 g/mol, besonders bevorzugt von 50.000 bis 100.000 g/mol.

Die Schmelzbereiche der in den in erfindungsgemäß verwendeten Dispersionen eingesetzten Ethylencopolymerwachse, enthaltend die Comonomeren (A), (B) und gegebenenfalls (C), liegen im Allgemeinen im Bereich von 60 bis 110°C, bevorzugt im Bereich von 70 bis 90°C, bestimmt durch DSC nach DIN 51007.

Die in den erfindungsgemäß verwendeten Dispersionen eingesetzten Ethylencopolymerwachse enthaltend die Comonomeren (A), (B) und gegebenenfalls (C) sind gradiente oder statistische Copolymere.

Das Molekulargewicht M_{w} der in den erfindungsgemäß verwendeten Dispersionen eingesetzten Ethylencopolymerwachse, enthaltend die Comonomeren (A'), (B') und gegebenenfalls (C'), von 5.000 bis 40.000 g/mol, bevorzugt 10.000 bis 30.000 g/mol, besonders bevorzugt 15.000 bis 25.000 g/mol.

Der Schmelzpunkt der in den erfindungsgemäß verwendeten Dispersionen eingesetzten Ethylencopolymerwachse, enthaltend die Comonomeren (A'), (B') und gegebenenfalls (C'), liegt im Allgemeinen im Bereich von 40 bis 100°C, bevorzugt im Bereich von 40°C bis 80°C, bestimmt durch DSC nach DIN 51007.

Die Herstellung von den verwendeten Ethylencopolymerwachsen kann nach an sich bekannten Verfahren zur Copolymerisation von Ethylen (B) bzw. (B'), Comonomer (A) bzw. (A') und gegebenenfalls weiteren Comonomeren (C) bzw. (C') in gerührten Hochdruckautoklaven oder in Hochdruckrohrreaktoren erfolgen. Die Herstellung in gerührten Hochdruckautoklaven ist bevorzugt. Gerührte Hochdruckautoklaven sind bekannt, eine Beschreibung findet man beispielsweise in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Details zur Herstellung von Ethylencopolymer sind auch in WO 2008/101937 genannt.

Die Herstellung von wässrigen Dispersionen von Ethylencopolymerwachsen ist an sich bekannt. Vorzugsweise geht man so vor, dass man ein oder mehrere Ethylencopolymere mit weiteren Substanzen in einem Gefäß platziert, beispielsweise einem Kolben, einem Autoklaven oder einem Kessel, und den Inhalt erwärmt.

Im Fall von Ethylencopolymerwachsen, enthaltend die Comonomeren (A'), (B') und gegebenenfalls (C'), gibt man eine oder mehrere Brønsted-Säuren wie beispielsweise organische Säuren wie Eisessig, Ameisensäure, Milchsäure, Buttersäure, Benzoesäure, Methansulfonsäure und Paratoluensulfonsäure oder anorganische Säuren wie Salpetersäure, Salzsäure, Phosphorsäure und Schwefelsäure und Wasser und gegebenenfalls weitere Substanzen beispielsweise Emulgatoren, zu, wobei die Reihenfolge der Zugabe von Brønsted-Säure bzw. Brønsted-Säuren sowie gegebenenfalls weiterer Substanzen beliebig ist.

Man setzt so viel Brønsted-Säure zu, dass das Ethylencopolymer in partiell oder vorzugsweise vollständig neutralisierter Form vorliegt. In einer Ausführungsform der vorliegenden Erfindung setzt man einen Überschuss an Brønsted-Säure ein.

Wenn in dem Ethylencopolymerwachs, enthaltend die Comonomeren (A'), (B') und gegebenenfalls (C'), das Comonomer (A') bereits in zumindest partiell protonierter Form vorliegt, kann man gegebenenfalls auf den Zusatz von Brønsted-Säure verzichten.

Im Fall von Ethylencopolymerwachsen, aufgebaut aus den Comonomeren (A), (B) und gegebenenfalls (C), gibt man üblicherweise eine oder mehrere basisch wirkende Substanzen zu, mit denen die Ethylencopolymerwachse zumindest partiell neutralisiert sind, beispielsweise Hydroxide und/oder Carbonate und/oder Hydrogencarbonate von Alkalimetallen, oder vorzugsweise Amine wie beispielsweise Ammoniak und organische Amine wie beispielsweise Alkylamine, N-Alkyl-ethanolamine, Alkanolamine und Polyamine. Beispielhaft für Alkylamine seien genannt: Triethylamin, Diethylamin, Ethylamin, Trimethylamin, Dimethylamin, Methylamin. Bevorzugte Amine sind Monoalkanolamine, N,N-Dialkylalkanolamine, N-Alkylalkanol-amine, Dialkanolamine, N-Alkyldialkanolamine und Trialkanolamine mit jeweils 2 bis 18 C-Atomen im Hydroxyalkylrest und gegebenenfalls jeweils 1 bis 6 C-Atomen im Alkylrest, bevorzugt 2 bis 6 C-Atomen im Alkanolrest und gegebenenfalls 1 oder 2 C-Atomen im Alkylrest. Ganz besonders bevorzugt sind Ethanolamin, Diethanolamin, Triethanolamin, Methyldiethanolamin, n-Butyldiethanolamin, N,N-Dimethylethanolamin und 2-Amino-2-methylpropanol-1. Ganz besonders bevorzugt sind Ammoniak und N,N-Dimethylethanolamin. An Polyaminen seien beispielhaft genannt: Ethylendiamin, Tetramethylethylendiamin (TMEDA), Diethylentriamin und Triethylentetramin.

In einer Ausführungsform der vorliegenden Erfindung enthalten erfindungsgemäß verwendete Dispersionen von Ethylencopolymerwachsen, aufgebaut aus den Comonomeren (A), (B) und gegebenenfalls (C), so viel basisch wirkende Substanz bzw. basisch wirkende Substanzen, dass mindestens die Hälfte, bevorzugt mindestens 60 mol-%, der Carboxylgruppen des oder der Ethylencopolymerwachse(s) neutralisiert sind.

In einer Ausführungsform der vorliegenden Erfindung enthalten erfindungsgemäß verwendete Dispersionen von Ethylencopolymerwachsen, aufgebaut aus den Comonomeren (A), (B) und gegebenenfalls (C), so viel basisch wirkende Substanz bzw. basisch wirkende Substanzen und insbesondere Amin, dass die Carboxylgruppen des oder der Ethylencopolymerwachse(s) quantitativ neutralisiert sind.

In einer Ausführungsform der vorliegenden Erfindung können erfindungsgemäß verwendete Dispersionen von Ethylencopolymerwachsen, aufgebaut aus den Comonomeren (A), (B) und gegebenenfalls (C), mehr basisch wirkende Substanz bzw. basisch wirkende Substanzen, insbesondere Amin, enthalten als zur vollständigen Neutralisation des oder der Ethylencopolymerwachse(s) erforderlich, beispielsweise einen Überschuss von bis zu 100 mol-%, bevorzugt bis zu 50 mol-%.

Wünscht man, die betreffende Dispersion bei einer Temperatur über 100°C herzustellen, ist es vorteilhaft, unter erhöhtem Druck zu arbeiten und das Gefäß entsprechend zu wählen. Man homogenisiert die entstehende Dispersion, beispielsweise durch mechanisches oder pneumatisches Rühren oder durch Schütteln. Man erwärmt vorteilhaft auf eine Temperatur über den Schmelzpunkt des Ethylencopolymerwachses. Vorteilhaft erwärmt man auf eine Temperatur, die mindestens 10°C, besonders vorteilhaft auf eine Temperatur, die mindestens 30°C über dem Schmelzpunkt des Ethylencopolymerwachses liegt.

Die erfindungsgemäß verwendeten wässrigen Dispersionen weisen einen Feststoffgehalt im Bereich von 5 bis 40 Gew.-%, bevorzugt 10 bis 30 Gew.-%, auf. Das für die Dispersionen verwendete Wasser ist vorzugsweise deionisiert ist, d.h. durch Destillation oder mit Hilfe eines Ionenaustauschers gereinigt.

Der pH-Wert der wässrigen Dispersionen, enthaltend Ethylencopolymerwachse, die aufgebaut sind aus Comonomeren (A), (B) und gegebenenfalls (C), beträgt im Allgemeinen 7 bis 14, bevorzugt 8 bis 10.

Der pH-Wert der wässrigen Dispersionen, enthaltend Ethylencopolymerwachse, die aufgebaut sind aus Comonomeren (A'), (B') und gegebenenfalls (C'), beträgt im Allgemeinen 1 bis 7, bevorzugt 3 bis 6.

Die vorgenannten wässrigen Ethylencopolymerwachs-Dispersionen werden erfindungsgemäß dazu verwendet mit üblichen Basislacken auf Wasserbasis die erfindungsgemäßen wässrigen modifizierten Lackformulierungen herzustellen. Dazu werden die vorgenannten wässrigen Ethylencopolymerwachs-Dispersionen direkt handelsüblichen wässrigen Lackformulierungen (= Basislack) auf Basis von beispielsweise Polyurethan-, Polyester-, Alkyd-, Melamin- und/oder Polyacrylatharzen zugemischt.

Weiterer Gegenstand der Erfindung ist die Verwendung der erfindungsgemäßen wässrigen modifizierten Lackformulierungen als Basislackformulierung zur Beschichtung von Kunststoffen. Bei den Kunststoffen kann es sich um Formteile aus vielen verschiedenen Bereichen handeln. Als Beispiele aus dem Automobilbereich sind zum Beispiel Stoßfänger, Tankdeckel etc zu nennen. Beispiele aus dem Haushaltsbereich sind Kleingeräte, Verpackungen, Spielzeuge etc. Zu diesem Zweck verwendete Kunststoffmaterialien sind beispielsweise Polyurethane, Polyamide, Polycarbonate, Polyester und insbesondere unpolare Kunststoffmaterialien. Beispiele für die letzteren sind Polyolefine wie Polyethylen, Ethylencopolymere, Polypropylen, Propylencopolymere, Polyolefinmischungen mit anderen Polymeren wie z.B. PP/EPDM-Blends, und PVC.

Zur Beschichtung werden die gereinigten und getrockneten Kunststoffoberflächen mit der modifizierten Basislackformulierung versehen. Die Beschichtung des Substrats kann in verschiedener Weise erfolgen beispielsweise durch Eintauchen, Aufsprühen oder Auftragen der modifizierten Basislackformulierung. Über diese Basislackformulierung kann dann noch ein Decklack, im Allgemeinen ein Klarlack, aufgetragen werden. Die Schichtdicke des Basis-bzw. des Klarlacks hängt von der jeweiligen Anwendung ab und kann erheblich variieren.

Die mit der modifizierten Basislackformulierung versehenen Kunststoffoberflächen zeichnen sich durch eine besonders gute Haftung des Lacks aus.

### Beispiele

### Herstellung der Ethylencopolymere

In einem Hochdruckautoklaven, wie er in der Literatur beschrieben ist (M. Buback et al., Chem. Ing. Tech. 1994, 66, 510), wurden Ethylen und entweder N,N-Dimethylaminoethylmethacrylat (DMAEMA) oder Methacrylsäure (MAS) kontinuierlich bei Temperaturen von 200 bis 250°C copolymerisiert. Dazu wurde Ethylen unter dem Reaktionsdruck in den Hochdruckautoklaven kontinuierlich eingespeist. Getrennt davon wurde das Copolymer, gegebenenfalls verdünnt mit Isododekan, in den Hochdruckautoklaven kontinuierlich eingespeist. Getrennt davon wurde die Initiatorlösung, bestehend aus tert.-Amylperoxypivalat gelöst in Isododekan, in den Hochdruckautoklaven kontinuierlich eingespeist. Getrennt davon wurde gegebenenfalls Propionaldehyd in den Hochdruckautoklaven kontinuierlich eingespeist. Der Druck betrug während der Polymerisation 1500 bis 2500 bar. Man erhielt Ethylencopolymere mit den aus Tabelle 1 ersichtlichen analytischen Daten.

**Tabelle 1: Analytische Daten eingesetzter Ethylencopolymere**

| Bsp. Nr. | Gehalt Ethylen [Gew.-%] | Gehalt DMAEMA [Gew.-%] | Gehalt Ethylen [Gew.-%] | Gehalt MAS [Gew.-%] | SchmelzPunkt [°C] | Mw [g/mol] | η [mPa·s] |
|---|---|---|---|---|---|---|---|
| 1 | 63 | 37 | - | - | 49 | 17.000 | 2600 |
| 2 | 69 | 31 | - | - | 41 | 21.700 | 7100 |
| 3 | - | - | 73 | 27 | 80 | 90.000 | > 50 000 |

Unter "Gehalt" ist der Anteil an einpolymerisierter MAS bzw. DMAEMA im jeweiligen Ethylencopolymer zu verstehen. Der Gehalt an MAS und N,N-Dimethylaminoethylmethacrylat in den Ethylencopolymeren wurde durch ¹H-NMR-Spektroskopie bestimmt.

η: dynamische Schmelzeviskosität, gemessen bei 120°C in einem Platte/Kegel-Viskosimeter (PP 35 Ti) 1,0 mm Spalte, und D = 10 [1/s] nach DIN 53018-1

### Herstellung von wässrigen Dispersionen der Ethylencopolymeren

In einem 2-Liter-Autoklaven mit Ankerrührer wurde jeweils die in Tabelle 2 angegebene Menge Ethylencopolymer nach Beispiel 1 bis 3 vorgelegt. Man erhitzte unter Rühren auf 130°C und tropfte anschließend innerhalb von 15 Minuten die in Tabelle 2 angegebene Menge Säure oder Amin (Zulauf 1) zu. Danach wurde innerhalb von 30 Minuten die restliche Menge Wasser (Zulauf 2) hinzugeben, und weitere 15 Minuten bei 130°C (Außentemperatur) gerührt. Danach wurde die Außentemperatur auf 100°C gesenkt, eine Stunde bei 100°C gerührt und dann innerhalb von 15 Minuten auf Zimmertemperatur abgekühlt. Man filtrierte mit einem Perlonfilter (100 µm) und erhielt die entsprechenden wässrigen Dispersionen.

**Tabelle 2: Ethylencopolymer-Dispersionen**

| Nr. | Copolymer Bsp. | Menge (B) [g] | Eisessig Zulauf 1 | DMEA Zulauf 1 | Menge H₂O [g], Zulauf 2 | pH-Wert Emulsion | Feststoffgehalt [Gew.-%] |
|---|---|---|---|---|---|---|---|
| D.1 | 1 | 225 | 32 g in 69 ml H₂O | - | 800 | 4,9 | 20 |
| D.2 | 2 | 225 | 28g in 72 ml H₂O | - | 800 | 4,6 | 20 |
| D.3 | 3 | 225 | - | 38 g in 114 ml H₂O | 648 | 9,0 | 21 |

### Beschichtung von Kunststoffoberflächen mit modifizierter Basislackformulierung

15x20 cm Kunststofftafeln aus PP/EPDM wurden mit Isopropanol gereinigt und danach getrocknet. Je einer handelsüblichen Basislackformulierung enthaltend PU-, Melamin- und Polyacrylat-Harze wurden die zuvor beschriebenen Ethylencopolymer-Dispersionen D.1 bis D.3 in Konzentrationen von 0,5/1,0/5,0 Gew.-% zugemischt. Die gereinigten Kunststoffoberflächen wurden mit der jeweiligen modifizierten Basislackformulierung beschichtet. Die Oberflächen wurden beflammt und mit einem Klarlack beschichtet. Die fertigen beschichteten Kunststofftafeln wurde noch mal beflammt. Bei der Auftragung der Basislackformulierung wurde ein 90 µm Kastenrakel und beim Klarlack ein 100 µm Stabrakel verwendet. Damit wurde eine gesamte Trockenfilmdicke von 70 µm erreicht. Als Nullprobe wurde eine Kunststofftafel nur mit der Basislackformulierung ohne Zumischung der vorbeschriebenen Ethylencopolymer-Dispersionen und Klarlack beschichtet.

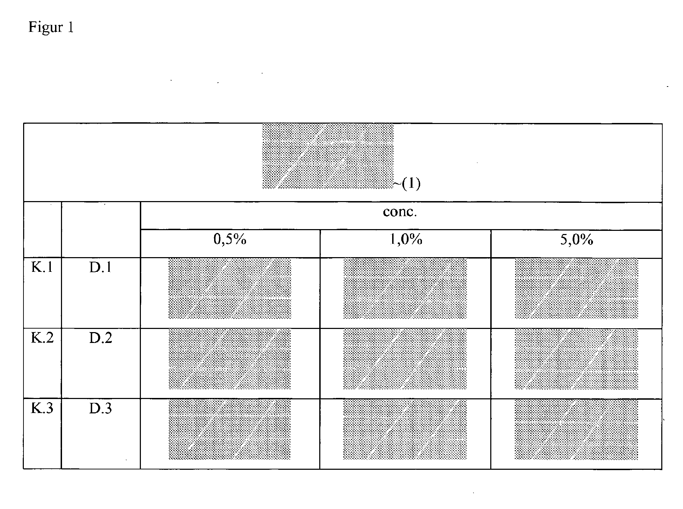

Die Tafeln wurden mit einem Messer in zwei parallele Linien sowohl horizontal als auch vertikal gerissen. Die Qualität der Haftung wurde nach DIN 55662 mit einem Dampfstrahltest geprüft. Die Ergebnisse des Dampfstrahltests wurden in Figur 1 zusammengefasst. Figur 1 zeigt tabellarisch Aufnahmen der entsprechend behandelten Kunststofftafeln. Zu Vergleichszwecken ist oberhalb der Tabelle die zuvor beschriebene Nullprobe (1) abgebildet. In den Spalten der Tabelle ist die jeweilige Konzentration (= conc.) der Ethylencopolymer-Dispersionen in der Basislackformulierung in Gew.-% angegeben. In den Reihen der Tabelle (K.1 bis K.3) ist die jeweils eingesetzte Ethylencopolymer-Dispersion (D.1 bis D.3) angegeben.

Figur 1 zeigt, dass durch die erfindungsgemäß verwendeten modifizierten Basislackformulierungen die Haftung auf der Kunststofftafel deutlich erhöht wird. Eine besonders gute Haftung wurde mit Basislackformulierungen enthaltend D.1 erzielt.

## Patentansprüche

1. Wässrige Lackformulierung bestehend aus mindestens einem wässrigen Basislack und mindestens einer wässrigen Dispersion von mindestens einem zumindest partiell neutralisierten Ethylencopolymerwachs, welches ausgewählt ist aus gradienten oder statistischen Ethylencopolymerwachsen, die als Comonomere einpolymerisiert enthalten:
(A) 12 bis 40 Gew.-%, vorzugsweise 20 bis 35 Gew.-%, mindestens einer ethylenisch ungesättigten Carbonsäure der allgemeinen Formel I, 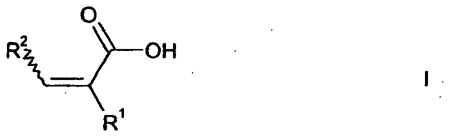 wobei
R¹ und R² unabhängig voneinander gewählt sind aus Wasserstoff, unverzweigtem und verzweigtem C₁-C₁₀-Alkyl;
(B) 60 bis 88 Gew.-%, vorzugsweise 80 bis 65 Gew.-%, Ethylen;
(C) 0 bis 10 Gew.-%, vorzugsweise 0 bis 5 Gew.-% Maleinsäureanhydrid und/oder Glycidylmethacrylat,
oder
(A') 5 bis 50 Gew.-%, vorzugsweise 20 bis 40 Gew.-%, mindestens eines
Comonomers der allgemeinen Formel 11 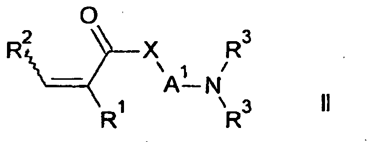 wobei
R¹ und R² unabhängig voneinander gewählt sind aus Wasserstoff, unverzweigtem und verzweigtem C₁-C₁₀-Alkyl,
R³ unabhängig voneinander gewählt sind aus Wasserstoff, unverzweigtem und verzweigtem C₁-C₁₀-Alkyl und C₃-C₁₂-Cycloalkyl, wobei zwei Reste R³ miteinander unter Bildung eines 3 bis 10-gliedrigen Rings verbunden sein können,
X gewählt ist aus Sauerstoff, Schwefel und N-R⁴,
R⁴ gewählt ist aus Wasserstoff und unverzweigtem und verzweigtem C₁-C₁₀-Alkyl, und
A¹ eine divalente Gruppe, gewählt aus C₁-C₁₀-Alkylen, C₄-C₁₀-Cycyloalkylen und Phenylen, ist;
(B') 50 bis 95 Gew.-% Ethylen, vorzugsweise 60 bis 80 Gew.-%, und
(C') null bis 20 Gew.-%, vorzugsweise null bis 10 Gew.-%, Maleinsäureanhydrid und/oder Glycidylmethacrylat,
wobei das Ethylencopolymerwachs enthaltend die Comonomeren (A), (B) und gegebenenfalls (C) ein Molekulargewicht M_{w} von 10.000 bis 150.000 g/mol und das Ethylencopolymerwachs enthaltend die Comonomeren (A'), (B') und gegebenenfalls (C') ein Molekulargewicht M_{w} von 5.000 bis 40.000 g/mol aufweist.

2. Lackformulierung nach Anspruch 1, **dadurch gekennzeichnet, dass** der Anteil der wässrigen Dispersion des Ethylencopolymerwachses 0,1 bis 10 Gew.-%, bezogen auf den wässrigen Basislack, beträgt.

3. Lackformulierung nach Anspruch 1 oder 2, **dadurch gekennzeichnet, dass** das Ethylencopolymer keine weiteren Comonomere (C) oder (C') enthält.

4. Lackformulierung nach einem der Ansprüche 1 bis 3, **dadurch gekennzeichnet, dass** die Reste in den Formeln I und II die folgende Bedeutung haben:
R¹ ist Wasserstoff oder Methyl,
beide Gruppen R³ sind gleich und stehen jeweils für Methyl oder Ethyl, und
X ist Sauerstoff.

5. Lackformulierung nach einem der Ansprüche 1 bis 4, **dadurch gekennzeichnet, dass** R² Wasserstoff bedeutet.

6. Verwendung der Lackformulierung gemäß einem der Ansprüche 1 bis 5 als Basislackformulierung zur Beschichtung von Kunststoffen.

7. Verwendung gemäß Anspruch 6, wobei die Kunststoffe Kunststoffformteile aus dem Automobil- und/oder Haushaltsbereich sind.

## Claims

1. An aqueous paint formulation composed of at least one aqueous basecoat and at least one aqueous dispersion of at least one at least partially neutralized ethylene copolymer wax which is selected from gradient or random ethylene copolymer waxes comprising as comonomers in copolymerized form:
(A) 12% to 40%, preferably 20% to 35%, by weight of at least one ethylenically unsaturated carboxylic acid of the general formula I, 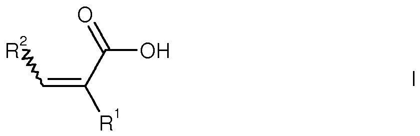 where
R¹ and R² are selected independently of one another from hydrogen and unbranched and branched C₁-C₁₀alkyl;
(B) 60% to 88%, preferably 80% to 65%, by weight of ethylene;
(C) 0% to 10%, preferably 0% to 5%, by weight of maleic anhydride and/or glycidyl methacrylate,
or
(A') 5% to 50%, preferably 20% to 40%, by weight of at least one comonomer of the general formula II 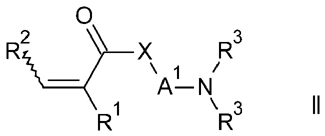 where
R¹ and R² are selected independently of one another from hydrogen and unbranched and branched C₁-C₁₀alkyl,
R³ is selected independently at each occurrence from hydrogen, unbranched and branched C₁-C₁₀alkyl, and C₃-C₁₂cycloalkyl, where two radicals R³ may be joined to one another to form a 3- to 10-membered ring, X is selected from oxygen, sulfur, and N-R⁴,
R⁴ is selected from hydrogen and unbranched and branched C₁-C₁₀alkyl, and
A¹ is a divalent group selected from C₁-C₁₀alkylene, C₄-₁₀cycloalkylene, and phenylene;
(B') 50% to 95% by weight of ethylene, preferably 60% to 80% by weight, and
(C') zero to 20% by weight, preferably zero to 10% by weight, of maleic anhydride and/or glycidyl methacrylate,
where the ethylene copolymer wax comprising the comonomers (A), (B), and optionally (C) has a molecular weight M_{w} of 10 000 to 150 000 g/mol, and the ethylene copolymer wax comprising the comonomers (A'), (B'), and optionally (C') has a molecular weight M_{w} of 5000 to 40 000 g/mol.

2. The paint formulation according to claim 1, wherein the fraction of the aqueous dispersion of the ethylene copolymer wax is 0.1% to 10% by weight, based on the aqueous basecoat.

3. The paint formulation according to claim 1 or 2, wherein the ethylene copolymer comprises no further comonomers (C) or (C').

4. The paint formulation according to any of claims 1 to 3, wherein the radicals in the formulae I and II have the following definitions:
R¹ is hydrogen or methyl,
both groups R³ are the same and are each methyl or ethyl, and
X is oxygen.

5. The paint formulation according to any of claims 1 to 4, wherein R² is hydrogen.

6. The use of the paint formulation according to any of claims 1 to 5 as a basecoat formulation for coating plastics.

7. The use according to claim 6, where the plastics are plastics moldings from the automobile and/or household sectors.

## Revendications

1. Composition de peinture à l'eau, constituée d'au moins une peinture de fond à l'eau et d'au moins une dispersion aqueuse d'au moins une cire de copolymère d'éthylène au moins partiellement neutralisée qui est choisie parmi des cires de copolymère d'éthylène statistiques ou en gradient, qui contiennent incorporés par copolymérisation en tant que comonomères :
(A) 12 à 40 % en poids, de préférence 20 à 35 % en poids, d'au moins un acide carboxylique à insaturation éthylénique de formule générale I, 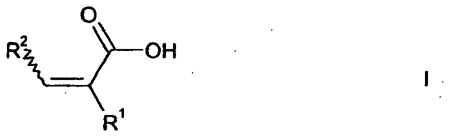 dans laquelle
R¹ et R² sont choisis indépendamment l'un de l'autre parmi un atome d'hydrogène, un groupe alkyle en C₁-C₁₀ ramifié ou non ramifié ;
(B) 60 à 88 % en poids, de préférence 80 à 65 % en poids, d'éthylène ;
(C) 0 à 10 % en poids, de préférence 0 à 5 % en poids d'anhydride maléique ou de méthacrylate de glycidyle,
ou
(A') 5 à 50 % en poids, de préférence 20 à 40 % en poids, d'au moins un comonomère de formule générale II 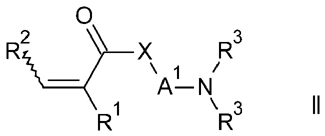 dans laquelle
R¹ et R² sont choisis indépendamment l'un de l'autre parmi un atome d'hydrogène, un groupe alkyle en C₁-C₁₀ ramifié ou non ramifié,
R³ sont choisis indépendamment l'un de l'autre parmi un atome d'hydrogène, un groupe alkyle en C₁-C₁₀ ramifié ou non ramifié et un groupe cycloalkyle en C₃-C₁₂, deux radicaux R³ pouvant être liés ensemble avec formation d'un cycle à 3 à 10 chaînons,
X est choisi parmi les atomes d'oxygène et de soufre et N-R⁴,
R⁴ est choisi parmi un atome d'hydrogène et un groupe alkyle en C₁-C₁₀ ramifié ou non ramifié, et A¹ est un groupe divalent, choisi parmi les groupes alkylène en C₁-C₁₀, cycloalkylène en C₄-C₁₀ et phénylène ;
(B') 50 à 95 % en poids, de préférence 60 à 80 % en poids, d'éthylène, et
(C') zéro à 20 % en poids, de préférence zéro à 10 % en poids, d'anhydride maléique et/ou de méthacrylate de glycidyle,
la cire de copolymère d'éthylène contenant les comonomères (A), (B) et éventuellement (C) présentant une masse moléculaire M_{w} de 10 000 à 150 000 g/mole et la cire de copolymère d'éthylène contenant les comonomères (A'), (B') et éventuellement (C') présentant une masse moléculaire M_{w} de 5 000 à 40 000 g/mole.

2. Composition de peinture selon la revendication 1, **caractérisée en ce que** la proportion de la dispersion aqueuse de la cire de copolymère d'éthylène vaut de 0,1 à 10 % en poids, par rapport à la peinture de fond à l'eau.

3. Composition de peinture selon la revendication 1 ou 2, **caractérisée en ce que** le copolymère d'éthylène ne contient pas d'autres comonomères (C) ou (C').

4. Composition de peinture selon l'une quelconque des revendications 1 à 3, **caractérisée en ce que** les radicaux dans les formules I et II ont la signification suivante :
R¹ est un atome d'hydrogène ou le groupe méthyle,
les deux groupes R³ sont identiques et représentent chacun le groupe méthyle ou éthyle, et
X est un atome d'oxygène.

5. Composition de peinture selon l'une quelconque des revendications 1 à 4, **caractérisée en ce que** R² représente un atome d'hydrogène.

6. Utilisation de la composition de peinture selon l'une quelconque des revendications 1 à 5, en tant que composition de peinture de fond pour le revêtement de matières plastiques.

7. Utilisation selon la revendication 6, dans laquelle les matières plastiques sont des pièces moulées en matière plastique du secteur de l'automobile et/ou du secteur domestique.
